# EUROPEAN PATENT SPECIFICATION

(11) **EP 1 288 278 B1**
(45) Date of publication and mention of the grant of the patent: **22.02.2006**
(21) Application number: 01307406.7
(22) Date of filing: 31.08.2001
(51) Int. Cl.: C10J 3/30, B01J 19/18

(54) **Gasification auger**
Schneckenreaktor zur Vergasung
Vis de gazéification

(43) Date of publication of application: 05.03.2003
(73) Proprietor: Webster, Andrew, Diss, Norfolk IP21 4PJ (GB)
(72) Inventor: Webster, Andrew, Diss, Norfolk IP21 4PJ (GB)
(74) Representative: Simons, Alison

(56) References cited:
- WO-A-01/44405
- WO-A-96/32163

## Description

This invention relates to equipment for the gasification, recovery of energy and/or disposal of materials.

Gasification is a known process whereby materials are heated with little or no oxygen present. The resulting gas is collected and burnt elsewhere.

Known gasification equipment generally relies solely on secondary burning of the material, in a comparatively large vessel, to sustain the process. This can result in poor controllability should a malfunction occur, with possible safety consequences.

Additionally existing apparatus usually needs a dry working material, thereby requiring a separate drying plant, which can be large and expensive.

An object of this invention is to provide an easily controlled, simpler and safer method of gasifying various undried materials. It is an advantage if any excess energy can be recovered and utilised.

According to the present invention there is provided apparatus for gasification of material comprising a pre-heating chamber; an enclosed auger arranged to receive the material via a hopper; a motor arranged to control rotation of the auger; and a twin walled combustion chamber surrounding part of the auger, the combustion chamber comprising an inner chamber and a plenum chamber and in which air direction tubes are placed between the inner and plenum chambers for directing air into a vortex surrounding the auger.

Injection of air into a vortex creates a vortex of flame surrounding the tube. It is an advantage if air is compressed before entering the combustion chamber to allow combustion of gas to occur at higher temperatures than would be obtained if the gas were combusted at normal atmospheric pressure.

Ideally the preheating chamber surrounds part of the auger allowing use of a single auger which simplifies the design, and allows more of the heat produced during combustion to be utilised.

It is an advantage if the auger helix is interrupted by a section comprising agitation blades. The material acts with the blades to provide a seal between zones which may be operating at different temperatures.

Preferably the heating chamber receives heated gas from the combustion chamber in order to aid drying and preheating of the material prior to gasification. A heat exchanger may also be arranged to receive heated gas from the combustion chamber in order to preheat air prior to the air entering the combustion chamber.
Additionally, heated gas from the combustion chamber may be used to run a gas turbine or devices utilising external combustion.

In order to provide control over combustible gasses entering and leaving the tube one or more apertures are provided for the removal of gases from the auger tube.

Preferably extracted gas from the auger tube is fed to a burner as fuel.

Preferably one or more apertures provided for the extraction of steam from the auger tube.

An embodiment of the invention will now be described, by way of example only, with reference to the accompanying drawings in which:-
Fig. 1 shows in side cross-section the apparatus and its various component parts.
Fig. 2 shows in end cross-section the combustion chamber.
Fig. 3 shows in end cross-section a heating chamber with an integral heat exchanger.

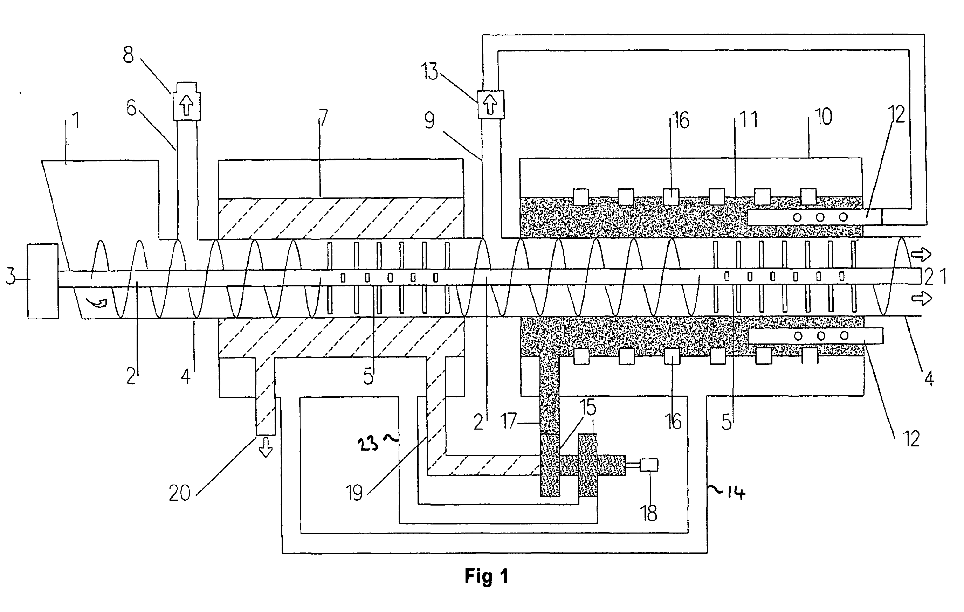

Referring to Fig 1, the apparatus comprises a hopper 1 which gravity feeds a raw material to an auger 2. The auger 2 is powered by a motor 3, which in this embodiment of the invention is a variable speed motor. The auger is encased in a tube 4 along its entire length. The auger helix is interrupted by a section of agitation blades 5, designed to slow the rate of the material's progress and thereby fill the tube 4, in order to form a seal or partial seal between temperature zones. In this embodiment of the invention there are two sections of agitation blades 5.

A pipe 6, positioned prior to the heating chamber 7, collects and discharges steam from the auger tube 4 to the atmosphere via a pump 8. A pipe 9 is positioned prior to a combustion chamber comprising a plenum chamber 10 and an inner chamber 11. The pipe 9 collects flammable gas from the auger tube 4, which is directed to burners 12 via a pump 13. The flammable gas is the main fuel source for the burners 12.

The auger 2 carries material to the section surrounded by the combustion chamber 10/11. The material is gasified in the auger tube 4 by the heat provided by the encircling chamber 11, which is fed with fuel by a number of burners 12. Air enters the plenum chamber 10 through a pipe 14, in this instance via compressor unit of gas turbine 15 and a heat exchanger comprising the heating chamber 7 and an outer chamber 22. This allows combustion to take place under high pressure so that a higher temperature can be obtained.

The heat exchanger 7,22 serves to pre-heat combustion air prior to the air entering the combustion chamber.

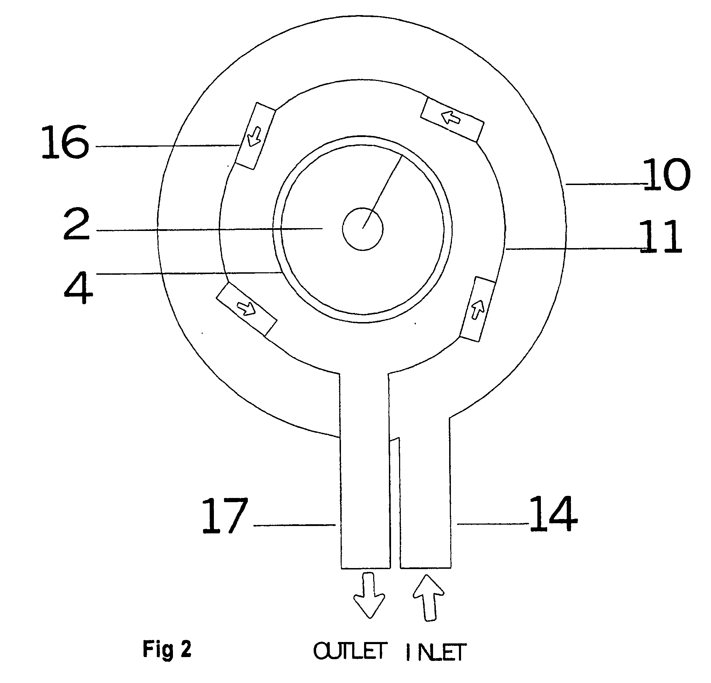

The air is then directed via tubes 16, illustrated in Fig 2, into a vortex around the auger tube 4 in the inner chamber 11. The resulting vortex of flame ensures an even distribution of heat.

Heated gas from the inner chamber 11 is collected via pipe 17, and in this embodiment of the invention is used to run a gas turbine powered generator 15/18 before being redirected into the heating chamber 7, via pipe 19, to assist in drying and pre-heating the raw material and pre-heating combustion air via the heat exchanger 7,22. An exhaust pipe 20 then vents gas to atmosphere, via commercially available cleaning devices if required.

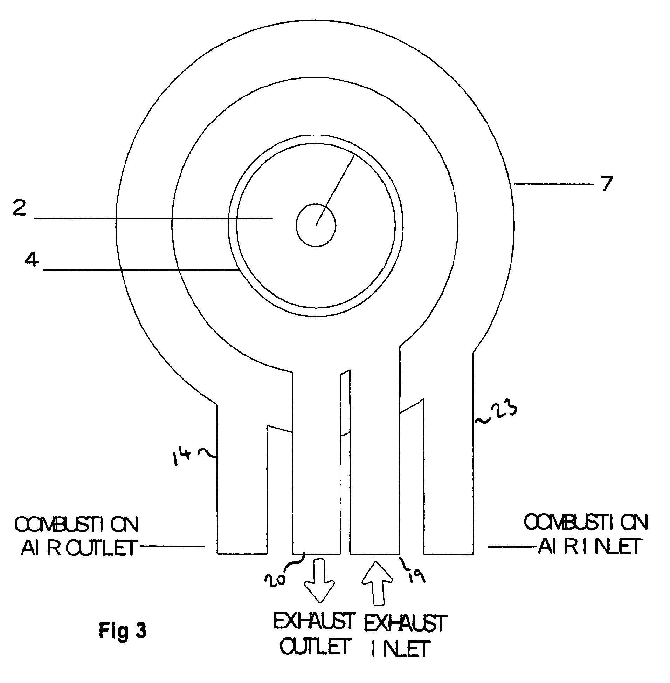

Figure 3 illustrates the heat exchanger 7,22 in cross section. Heated gas from the combustion chamber enters the heat exchanger via pipe 19, and exits via exhaust pipe 20. In this embodiment of the invention, the heated gas is used both to heat the raw material in the auger 4, and to pre-heat combustion air in the outer chamber 22. Combustion air enters the outer chamber 22 via an inlet 23, and is then directed to outlet 14 which directs the preheated air to the plenum chamber 10.

The burnt material from the auger tube 4 is discharged to a skip or other container at its termination 21.

The whole apparatus is preferably of welded and bolted steel construction, and sited with the end at which material is discharged from the auger being raised to provide an efficient working angle.

## Claims

1. Apparatus for gasification of material comprising a pre-heating chamber (7);
an enclosed auger (2) arranged to receive the material via a hopper;
a motor (3) arranged to control rotation of the auger; and
a twin walled combustion chamber (10, 11) surrounding part of the auger (2), the combustion chamber (10, 11) comprising an inner chamber (11) and plenum chamber (10) and in which air direction tubes (16) are placed between the inner and plenum chambers for directing air into a vortex surrounding the auger (2).

2. An apparatus according to claim 1 in which compressed air is fed into the combustion chamber (10,11).

3. An apparatus according to claim 1 or claim 2, in which the preheating chamber (7) surrounds part of the auger.

4. An apparatus according to any one of the preceding claims, in which the auger helix is interrupted by a section comprising agitation blades (5).

5. An apparatus according to any one of the preceding claims in which the heating chamber (7) receives heated gas from the combustion chamber (10,11).

6. An apparatus according to any one of the preceding claims in which a heat exchanger (7,22) receives heated gas from the combustion chamber (10,11) and is arranged to pre-heat air entering said combustion chamber.

7. An apparatus according to any one of the preceding claims in which heated gas is used to run a gas turbine or devices utilising external combustion.

8. An apparatus according to any one of the preceding claims in which an aperture (9) is provided for the removal of gases from the auger tube (4).

9. An apparatus according to any one of the preceding claims in which gas from the auger tube is fed to a burner (12) as fuel.

10. An apparatus according to any one of the preceding claims in which an aperture (6) is provided for the extraction of steam from the auger tube (4).

## Revendications

1. Appareil pour la gazéification de matière, comprenant une chambre de pré - chauffe (7) ;
une vis recouverte (2) agencée pour recevoir la matière par l'intermédiaire d'une trémie;
un moteur (3) agencé pour commander la rotation de la vis ; et
une chambre de combustion à double paroi (10,11) entourant une partie de la vis (2), la chambre de combustion (10,11) comprenant une chambre interne (11) et une chambre de plénum (10) et dans laquelle sont placés des tubes directionnels d'air (16) entre la chambre interne et la chambre de plénum pour diriger l'air dans un tourbillon entourant la vis (2).

2. Appareil selon la revendication 1, dans lequel de l'air comprimé est amené dans la chambre de combustion (10,11).

3. Appareil selon la revendication 1 ou la revendication 2, dans lequel la chambre de pré -chauffe (7) entoure une partie de la vis.

4. Appareil selon l'une quelconque des revendications lequel l'hélice de la vis est interrompue par une section comprenant des lames de brassage (5).

5. Appareil selon l'une quelconque des revendications précédentes, dans lequel la chambre de pré -chauffe (7) reçoit le gaz chauffé en provenance de la chambre de combustion (10,11).

6. Appareil selon l'une quelconque des revendications précédentes, dans lequel un échangeur de chaleur (7,22) reçoit du gaz chauffé à partir de la chambre de combustion (10,11) et est agencé pour pré -chauffer l'air pénétrant dans ladite chambre de combustion.

7. Appareil selon l'une quelconque des revendications précédentes, dans lequel le gaz chauffé est utilisé pour actionner une turbine à gaz ou des dispositifs faisant appel à la combustion externe.

8. Appareil selon l'une quelconque des revendications précédentes, dans lequel il est prévu une ouverture (9) pour l'extraction des gaz en provenance du tube à vis (4).

9. Appareil selon l'une quelconque des revendications précédentes dans lequel le gaz en provenance du tube de vis est acheminé dans un brûleur (12) commne combustible.

10. Appareil selon l'une quelconque des revendications précédentes, dans lequel il est prévu une ouverture (6) pour l'extraction de la vapeur à partir du tube à vis (4).

## Patentansprüche

1. Vorrichtung zur Vergasung von Material, die folgendes umfaßt:
eine Vorwärmkammer (7);
einen ummantelten Schneckenreaktor (2), der vorgesehen ist, um das Material über einen Trichter aufzunehmen;
einen Motor (3), der vorgesehen ist, um die Drehung des Schneckenreaktors zu steuern; und
eine doppelwandige Brennkammer (10, 11), die einen Teil des Schneckenreaktors (2) umgibt, wobei in der eine Innenkammer (11) und eine Luftkammer (10) umfassenden Brennkammer (10, 11) Luftleitrohre (16) zwischen der Innenkammer und der Luftkammer vorgesehen sind, um Luft in einen den Schneckenreaktor (2) umgebenden Wirbel einzuleiten.

2. Vorrichtung nach Anspruch 1, bei der Druckluft in die Brennkammer (10, 11) eingeführt wird.

3. Vorrichtung nach Anspruch 1 oder Anspruch 2, bei der die Vorwärmkammer (7) einen Teil des Schneckenreaktors umgibt.

4. Vorrichtung nach einem der vorstehend aufgeführten Ansprüche, bei der die Schneckenreaktorwendel durch einen Rührschaufeln (5) umfassenden Bereich unterbrochen ist.

5. Vorrichtung nach einem der vorstehend aufgeführten Ansprüche, bei der die Vorwärmkammer (7) erwärmtes Gas aus der Brennkammer (10, 11) erhält.

6. Vorrichtung nach einem der vorstehend aufgeführten Ansprüche, bei der ein Wärmetauscher (7, 22) erwärmtes Gas aus der Brennkammer (10, 11) erhält und vorgesehen ist, um in die Brennkammer eintretende Luft vorzuwärmen.

7. Vorrichtung nach einem der vorstehend aufgeführten Ansprüche, bei der erwärmtes Gas verwendet wird, um eine Gasturbine oder Einrichtungen unter Nutzung externer Verbrennung zu betreiben.

8. Vorrichtung nach einem der vorstehend aufgeführten Ansprüche, bei der eine Öffnung (9) vorgesehen ist, um Gase aus dem Schneckenreaktorrohr (4) zu entfernen.

9. Vorrichtung nach einem der vorstehend aufgeführten Ansprüche, bei der Gas aus dem Schneckenreaktorrohr einem Brenner (12) als Brennstoff zugeführt wird.

10. Vorrichtung nach einem der vorstehend aufgeführten Ansprüche, bei der eine Öffnung (6) vorgesehen ist, um Dampf aus dem Schneckenreaktorrohr (4) abzuziehen.
